# EUROPÄISCHE PATENTANMELDUNG

(11) **EP 2 641 872 A1**
(43) Veröffentlichungstag der Anmeldung: **25.09.2013**
(21) Anmeldenummer: 13172401.5
(22) Anmeldetag: 07.02.2007
(51) Int. Cl.: C02F 1/28

(54) **Wechselanzeige für eine Wasserfiltervorrichtung**

(30) Priorität: 09.02.2006 DE 102006006230
(62) Teilanmeldung aus: 07711463.5
(71) Anmelder: BWT water+more GmbH, 5310 Mondsee (AT)
(72) Erfinder: Bender, Stefan, 65187 Wiesbaden (DE)
(74) Vertreter: Blumbach Zinngrebe

(57) **Zusammenfassung**

Die Erfindung betrifft eine Wechselanzeige für eine Wasserfiltervorrichtung mit einer austauschbaren Filterpatrone, einem Deckel mit zumindest einer Einfüllöffnung, welche einen Verschlussmechanismus aufweist, wobei die Wechselanzeige mit dem Verschlussmechanismus zusammenwirkt, und wobei das Zusammenwirken des Schalters mit der Wechselanzeige nach einmaliger Betätigung des Schalters für ein vorgegebenes Zeitintervall gesperrt ist.

## Beschreibung

### Gebiet der Erfindung

Die Erfindung betrifft eine Wechselanzeige für eine Wasserfiltervorrichtung.

### Hintergrund der Erfindung

Wechselanzeigen für Wasserfiltervorrichtungen, insbesondere im Haushaltsbereich sind bekannt.

So zeigt beispielsweise die EP 0 891 952 (BRITA) eine Wechselanzeige für eine Wasserfiltervorrichtung, welche Mittel zum Zählen der Anzahl der Betätigungen eines Öffnungsmechanismus sowie einen Zeitmesser aufweist und so errechnet, wann eine in der Wasserfiltervorrichtung angeordnete Filterpatrone auszutauschen ist. Über eine optische Anzeige wird signalisiert, wenn die Filterpatrone ausgetauscht werden muss. Nach Austauschen der Filterpatrone kann der Benutzer eine Rücksetztaste drücken, um die Anzeige wieder in den Ausgangszustand zurück zu versetzen.

Nachteilig an einer derartig bekannten Wechselanzeige für eine Wasserfiltervorrichtung hat sich gezeigt, dass ein derartiger Rücksetzschalter empfindlich gegen Fehlbedienungen ist, so wird er häufig von Kindern versehentlich bedient. Darüber hinaus ist ein derartiger Rücksetzschalter aufwendig und lässt sich nur schwer hinreichend gegen Feuchtigkeit schützen.

### Aufgabe der Erfindung

Der Erfindung liegt demgegenüber die Aufgabe zugrunde, eine Wechselanzeige für eine Wasserfiltervorrichtung bereitzustellen, welche die vorstehend genannten Nachteile des Standes der Technik verringert und insbesondere eine einfachere und sichere Bedienung ermöglicht.

Eine weitere Aufgabe der Erfindung ist es, die Genauigkeit der Wechselanzeige zu verbessern.

Nach einer weiteren Aufgabe der Erfindung soll das Rücksetzen der Wechselanzeige zumindest teilweise automatisiert werden.

### Kurze Beschreibung der Erfindung

Die Aufgabe der Erfindung wird bereits durch eine Wechselanzeige für eine Wasserfiltervorrichtung gemäß einem der unabhängigen Ansprüche erreicht.

Bevorzugte Ausführungsformen und Weiterbildung der Erfindung sind den jeweiligen Unteransprüchen zu entnehmen.

Gemäß der Erfindung ist eine Wechselanzeige für eine Wasserfiltervorrichtung vorgesehen, wobei die Wasserfiltervorrichtung eine austauschbare Filterpatrone umfasst, einen Deckel mit einer Einfüllöffnung, welche einen Verschlussmechanismus aufweist, und die Wechselanzeige mit dem Verschlussmechanismus zusammenwirkt.

Unter Zusammenwirken wird im Sinne der Erfindung verstanden, dass sich das Öffnen und Schließen des Verschlussmechanismus auf die Wechselanzeige auswirkt, der Art dass zumindest unter anderem anhand des Öffnens und Schließens des Verschlussmechanismus die Wechselanzeige errechnet, wann die Filterpatrone auszutauschen ist.

Die Wechselanzeige kann über eine Betätigung des Verschlussmechanismus in eine Ausgangsstellung rücksetzbar sein. Wird die Wechselanzeige über den Verschlussmechanismus selbst zurückgesetzt, ist kein zusätzlicher Rücksetzschalter notwendig. Eine derartig ausgebildete Wechselanzeige ist somit billiger herzustellen, ist zuverlässiger und sicherer gegen Fehlbedienung.

Das Rücksetzen der Wechselanzeige kann beispielsweise durch mehrmalige Betätigung des Verschlussmechanismus in einem vorgegebenen Zeitintervall erfolgen, wie es bei einer besonderen Ausführungsform der Erfindung vorgesehen ist. So kann ein Rücksetz-Code eingegeben werden, beispielsweise muss innerhalb von zehn Sekunden der Verschlussmechanismus fünfmal hintereinander bewegt werden, um die Wechselanzeige zurückzusetzen. Werden die zehn Sekunden überschritten, fährt die Wechselanzeige wieder in ihren Normalzustand zurück, das heißt ein Rücksetzen ist dann erst wieder möglich, wenn wiederum innerhalb von zehn Sekunden der Verschlussmechanismus fünfmal betätigt wird.

Unter einem Verschlussmechanismus wird im Sinne der Anmeldung nicht notwendigerweise ein Mechanismus verstanden, welcher den Deckel der Wasserfiltervorrichtung beziehungsweise die Wasserfiltervorrichtung an sich dicht verschließt, sondern es kann sich hierbei auch um eine einfache Abdeckung handeln, welche eher eine rein ästhetische Funktion hat oder Wasserfiltervorrichtung vor Staub schützen soll.

Bei einer besonderen Ausführungsform der Erfindung umfasst der Verschlussmechanismus einen Schieber.

Die Betätigung des Verschlussmechanismus erfolgt vorzugsweise über einen magnetisch gesteuerten Schalter, insbesondere über einen Reed-Schalter. Ein derartiger magnetisch betätigbarer Schalter hat den Vorteil, dass er vollständig verkapselt werden kann und nicht mechanisch mit anderen Bauteilen zusammenwirkt. Um den Schalter zu betätigen, kann dann an einer geeigneten Stelle des Gehäuses beziehungsweise des Deckels ein Magnet angeordnet sein. So wird der Schalter berührungslos betätigt.

Vorzugsweise wird der Schalter im Wesentlichen in dem Schieber angeordnet. Insbesondere ist ein Reed-Schalter im Schieber angeordnet, wohingegen der Magnet, der dem Reed-Schalter eine Anfangs- oder Endstellung liefert, im Deckel oder im Gehäuse der Wasserfiltervorrichtung angeordnet ist.

Der Schalter ist bei einer bevorzugten Ausführungsform der Erfindung wassergeschützt, insbesondere ist er in einem wasserdichten Kunststoffgehäuse angeordnet und wirkt mit einem am Deckel angeordneten Magneten zusammen. So ist es möglich, die Wechselanzeige komplett in Kunststoff zu vergießen oder durch eine Dichtung abgedichtet einzubauen, so dass ein Deckel für eine Wasserfiltervorrichtung mit einer erfindungsgemäßen Wechselanzeige sogar in der Spülmaschine gereinigt werden kann.

Um anzuzeigen, wann die Filterpatrone gewechselt werden muss, umfasst die Wechselanzeige vorzugsweise ein Display, insbesondere ein LCD-Display. Derartige LCD-Display's sind preisgünstig und haben einen geringen Stromverbrauch.

So kann eine derartige Wechselanzeige jahrelang mit einer einzigen Batterie, insbesondere einer Knopfzelle auskommen. Das Display ist vorzugsweise Teil der Wechselanzeige und als ein elektronisches Bauteil insbesondere in dem Schieber des Deckels angeordnet.

Bei einer Weiterbildung der Erfindung ist der Deckel derart ausgebildet, dass das Display bei geschlossenem Verschlussmechanismus verdeckt ist.

So stört die Wechselanzeige nicht die ästhetische Formgebung der Wasserfiltervorrichtung. Dies lässt sich insbesondere deshalb leicht erreichen, da kein zusätzlicher Rücksetzschalter notwendig ist.

Der notwendig werdende Austausch der Filterkartusche wird vorzugsweise über ein optisches Signal angezeigt. Ein derartiges optisches Signal kann auch eine Skala umfassen, nach der beispielsweise der Verbrauch der Filterkartusche beispielsweise in Prozent angezeigt wird.

Bei einer Weiterbildung der Erfindung ist die Wechselanzeige bei Nichtbetätigung oder nach einer vorgegebenen Zeitspanne nach Betätigung in eine Schlafstellung versetzbar, bei welcher insbesondere das Display ausgeschaltet wird und so der Stromverbrauch erheblich herabgesetzt wird.

Vorzugsweise wird die Schlafstellung durch das Schließen des Verschlussmechanismus aktiviert.

Alternativ oder in Kombination kann die Schlafstellung auch durch einen Zeitgeber aktiviert werden.

Bei einer Weiterbildung der Erfindung wirkt die Wechselanzeige mit einem vorzugsweise in der Wechselanzeige integrierten Zeitgeber zusammen. So kann die Anzeige eines notwendigen Filteraustausches nicht nur von der Anzahl der Betätigungen des Verschlussmechanismus, sondern auch von der abgelaufenen Zeit abhängig gemacht werden.

Bei einer bevorzugten Ausführungsform der Erfindung umfasst die Wechselanzeige zumindest einen integrierten Schaltkreis, insbesondere einen Mikroprozessor.

Insbesondere sind sämtliche wesentlichen Komponenten der Wechselanzeige wie Stromversorgung, Elektronik und Display auf einer einzigen Platine angeordnet, welche dann in einem wasserdichten Kunststoffgehäuse, welches beispielsweise Bestandteil eines Verschlussmechanismus sein kann, integriert ist.

Die Wechselanzeige kann eine Vorrichtung zur Erfassung der Abnahme des Deckels aufweisen, wobei die Wechselanzeige mit der Vorrichtung zur Erfassung der Abnahme des Deckels zusammenwirkt.

Eine derartig ausgebildete Wechselanzeige kann beispielsweise aus der Abnahme des Deckels darauf schließen, dass die Filterpatrone ausgetauscht wurde und so wird die Wechselanzeige in die Ausgangsstellung zurück versetzt. Alternativ kann die Vorrichtung zur Erfassung der Abnahme des Deckels auch den Verschlussmechanismus ersetzen.

Gemäß einer weiteren Alternative umfasst die Wechselanzeige eine Vorrichtung zur Erfassung der Entfernung der Filterpatrone, wobei die Wechselanzeige mit der Vorrichtung zur Erfassung der Entfernung der Filterpatrone zusammenwirkt.

Die Wechselanzeige kann mit einer Einrichtung zur Messung des Wasserstandes in dem zur Wasserfiltervorrichtung zugehörigen Behälter zusammenwirken.

So kann die Genauigkeit einer derartigen Wechselanzeige wesentlich verbessert werden, da derartige Wasserfiltervorrichtungen, insbesondere bei Verwendung im Haushaltsbereich nicht notwendigerweise beim Öffnen des Deckels beziehungsweise der Einfüllöffnung vollständig entleert sind und dann wieder gefüllt werden, sondern häufig nachgeschüttet wird oder der Behälter nicht ganz gefüllt wird. Diese Verwendungszustände kann mit einer Wasserstandsanzeige erfasst werden.

Eine derartige Wechselanzeige kann noch weitere Merkmale aufweisen, wie es gemäß den vorstehend beschriebenen Wechselanzeigen für Wasserfiltervorrichtungen beschrieben ist.

bei einer bevorzugten Ausführungsform der Erfindung umfasst die Einrichtung zur Messung des Wasserstandes einen Ultraschallgeber, welcher insbesondere im Deckel der Wasserfiltervorrichtung angeordnet sein kann. Über derartige Ultraschallgeber lässt sich auf besonders einfache Weise eine kompakte Messeinrichtung realisieren, über welche die Höhe des Wasserstandes hinreichend genau bestimmt werden kann.

Die Erfindung betrifft eine Wechselanzeige für eine Wasserfiltervorrichtung, welche einen Schalter umfasst, der die Betätigung des Verschlussmechanismus erfasst, wobei der Schalter nach einer Betätigung für ein vorgegebenes Zeitintervall gesperrt ist.

Ein derartiger Schalter wirkt mit der Wechselanzeige zusammen. Durch die Sperrung des Schalters für ein bestimmtes Zeitintervall nach einer Betätigung wird verhindert, dass bei Befüllung der Wasserfiltervorrichtung durch Fehlbedienung, etwa durch mehrmaliges Öffnen und Schließen des Verschlussmechanismus, die Wechselanzeige weiter zählt und so einen zu frühen Austausch der Filterpatrone signalisiert.

Die derartige Wechselanzeige kann noch mit einem oder mehreren weiteren Merkmalen gemäß vorstehend beschriebenen Wechselanzeigen kombiniert werden.

### Kurzbeschreibung der Zeichnungen

Die Erfindung soll im Folgenden anhand der Zeichnungen Fig. 1 bis Fig. 6 näher erläutert werden, welche eine erfindungsgemäße Wasserfiltervorrichtung anhand eines Ausführungsbeispiels zeigen.
- Fig. 1: zeigt eine perspektivische Ansicht einer erfindungsgemäßen Wasserfiltervorrichtung,
- Fig. 2: zeigt eine Detailansicht des Deckels einer erfindungsgemäßen Wasserfiltervorrichtung,
- Fig. 3: zeigt eine perspektivische Detailansicht eines Schiebers, welcher Teil des Deckels einer erfindungsgemäßen Wasserfiltervorrichtung ist,
- Fig. 4: zeigt eine weitere Ansicht des Schiebers aus Fig. 3,
- Fig. 5: zeigt schematisch die wesentlichen Bestandteile einer erfindungsgemäßen Wechselanzeige,
- Fig. 6: zeigt eine Wechselanzeige in einer weiteren Ansicht.

### Detaillierte Beschreibung der Zeichnungen

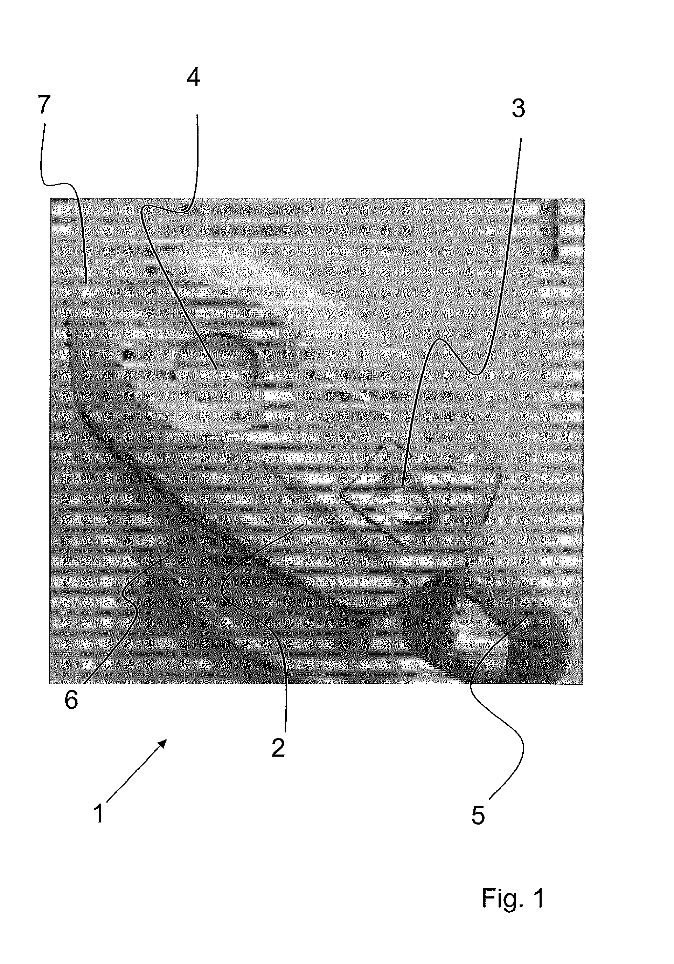

Bezug nehmend auf Fig. 1 werden die wesentlichen Bestandteile einer Wasserfiltervorrichtung 1 näher erläutert.

Die Wasserfiltervorrichtung 1 umfasst einen abnehmbaren Deckel 2, welcher einen Verschlussmechanismus aufweist. Der Verschlussmechanismus umfasst einen Schieber 3, welcher im Deckel 2 beweglich angeordnet ist. Über den Schieber 3 wird die Einfüllöffnung 4 verschlossen. Weiter umfasst die Wasserfiltervorrichtung einen Behälter 6, einen Griff 5 und einen Auslauf 7, sowie eine Filterpatrone (nicht dargestellt).

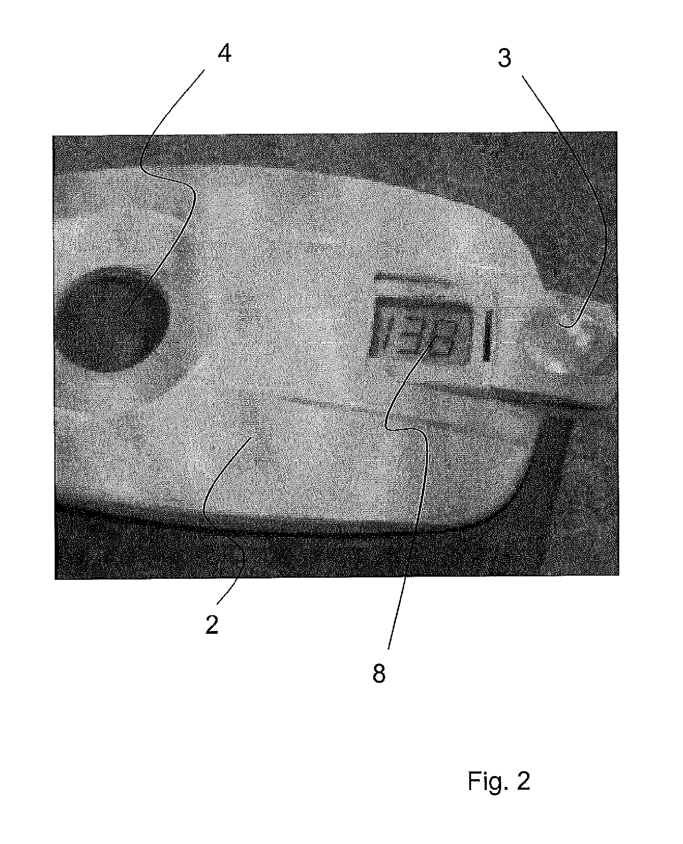

Bezug nehmend auf Fig. 2, die den Deckel 2 der Wasserfiltervorrichtung aus Fig. 1 in Detailansicht zeigt, ist zu erkennen, wie die Einfüllöffnung 4 geöffnet ist. Der Schieber 3 ist zurückgezogen, so dass die Einfüllöffnung 4 freigegeben ist. Gleichzeitig wird mit dem Zurückziehen des Schiebers 3 ein Display 8 freigegeben, welches Bestandteil der im Deckel 2 angeordneten Wechselanzeige ist.

Zum Rücksetzen der Anzeige des Displays 8 muss der Schieber 3 innerhalb von 10 s betätigt werden. Wird das Zeitintervall überschritten, fällt die Anzeige wieder in den normalen Modus zurück.

Um zu verhindern, dass die Anzeige bei mehrmaliger Betätigung des Schiebers weiter zählt, ist der Zähler der Wechselanzeige (nicht dargestellt) nach einmaliger Betätigung für ein vorgegebenes Zeitintervall gesperrt.

Mit Zurückziehen des Schiebers 3 wird das Display 8 der Wechselanzeige aktiviert. Mit dem Vorschieben des Schiebers 3 wird das Display 8 wieder deaktiviert, die Wechselanzeige fällt in eine Schlafstellung zurück.

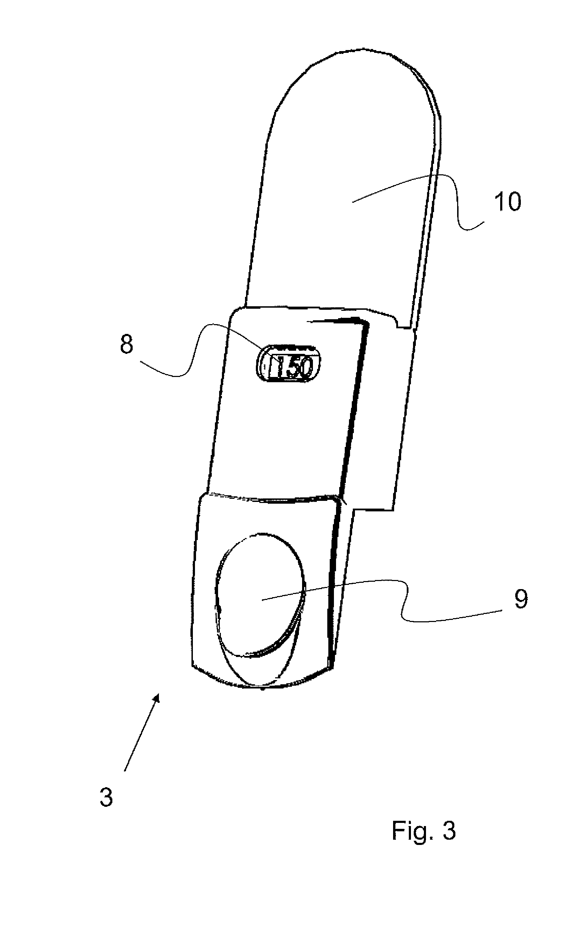

Fig. 3 zeigt eine perspektivische Ansicht des im Deckel (nicht dargestellt) angeordneten Schiebers 3. Der Schieber 3 umfasst einen Verschluss 10 zum Schließen der Einfüllöffnung (nicht dargestellt) sowie einen Griff 9, über welchen leicht, beispielsweise mittels des Daumens, der Schieber vor- und zurückgeschoben werden kann. Im Schieber integriert sind die wesentlichen Bestandteile der Wechselanzeige. Zu erkennen ist hier das Display 8 der Wechselanzeige, welches als LCD-Display ausgebildet ist. Die Wechselanzeige ist vollständig in den Schieber integriert und umfasst einen Reed-Schalter, welcher über einen im Deckel angeordneten Magneten (nicht dargestellt) betätigt wird.

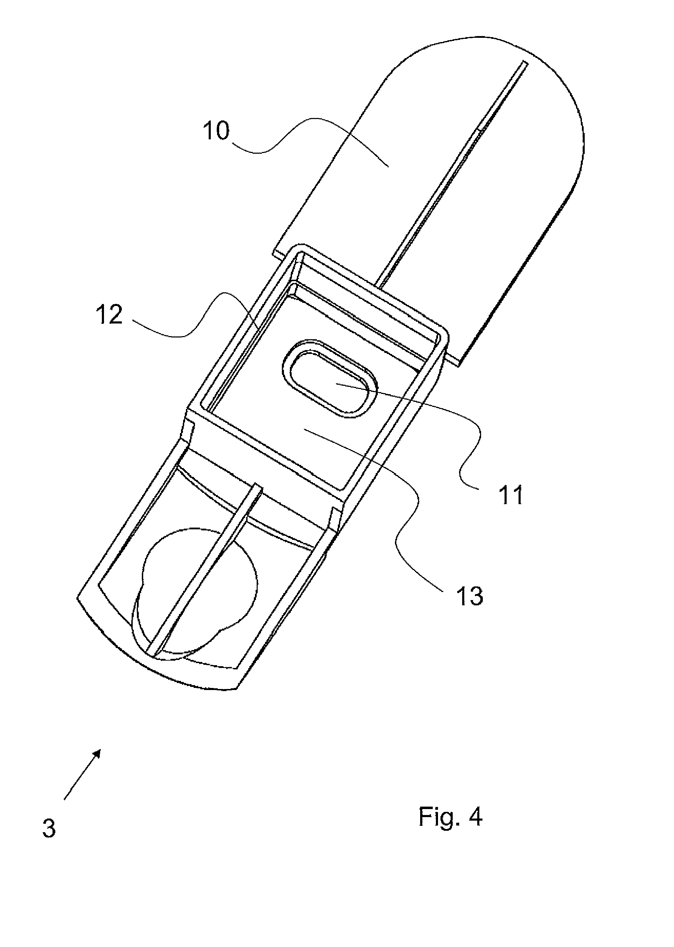

Fig. 4 zeigt den Schieber 3 in einer weiteren Ansicht, wobei hier die Wechselanzeige herausgenommen ist. Der Schieber 3 ist im Wesentlichen einstückig ausgebildet und umfasst einen Verschluss 10. Zur Aufnahme der Wechselanzeige (nicht dargestellt) umfasst der Schieber 3 ein Gehäuse mit einer Aussparung 13 zur Aufnahme der Wechselanzeige. Weiter umfasst das Gehäuse ein Fenster 11, durch welches das LCD-Display der Wechselanzeige (nicht dargestellt) sichtbar ist. Das Fenster wird durch eine Plexiglasscheibe gebildet, welche mit einer Dichtung 12 in die Aussparung eingebracht ist.

Nach Einbringen der Wechselanzeige wird die Aussparung 13 mit einer Kunststoffplatte Ultraschall-verschweißt und ist so vollständig versiegelt, so dass der Deckel der Wasserfiltervorrichtung in der Spülmaschine gereinigt werden kann.

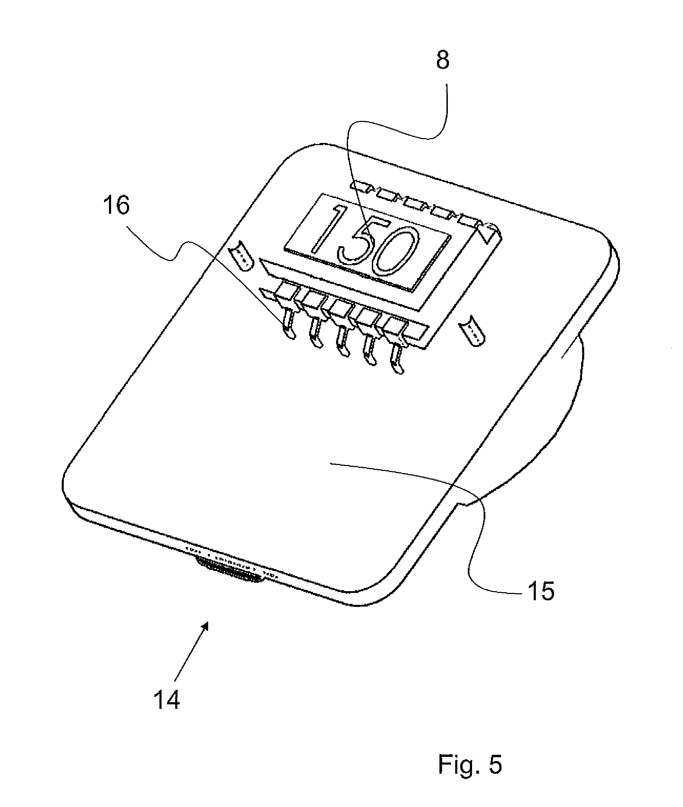

Fig. 5 zeigt schematisch ein Ausführungsbeispiel einer erfindungsgemäßen Wechselanzeige 14. Die Wechselanzeige 14 umfasst eine Platine 15, welche auf der Vorderseite ein LCD-Display 8 aufweist. Das LCD-Display 8 umfasst Kontakte 16, welche in der Platine 15 eingelötet sind.

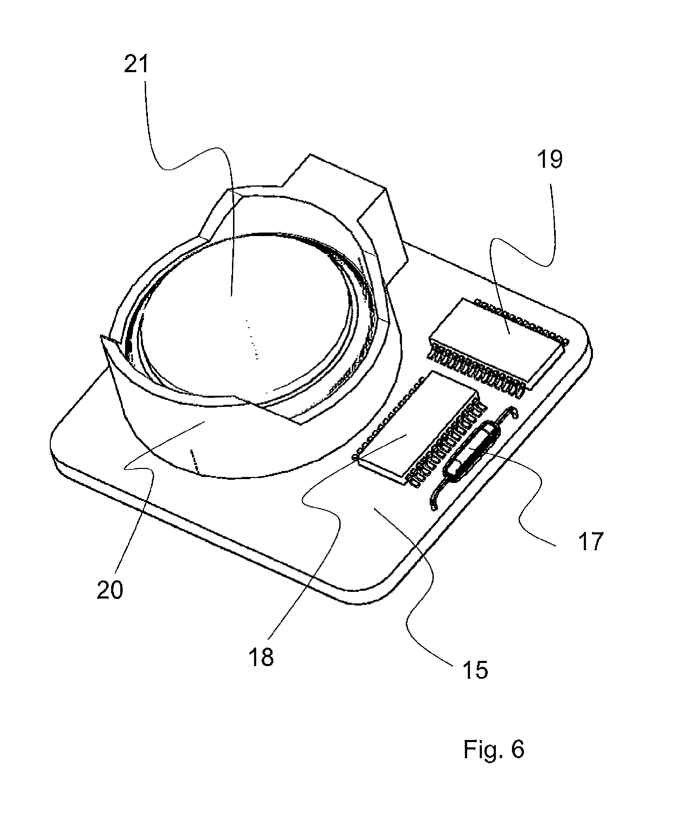

Fig. 6 zeigt eine schematische Ansicht der Rückseite der Wechselanzeige aus Fig. 5, anhand welcher vor allem die elektronischen Komponenten näher erläutert werden.

Auf der Rückseite der Platine 15 ist ein Reed-Kontat 17 angeordnet. Der Reed-Kontakt 17 ist dazu ausgebildet, mit einem Magneten im Deckel der Wasserfiltervorrichtung (nicht dargestellt) zusammenzuwirken. Der Reed-Kontakt 17 ist auch mit einem Reed-Relais 18 verbunden und bildet somit einen Reed-Schalter aus. Weiter ist auf der Platine ein integrierter Schaltkreis 19 angeordnet, welcher zur Ermittlung des notwendig werdenden Austausches der Filterkartusche mit dem Reed-Schalter zusammenwirkt. Der integrierte Schaltkreis 19, welcher als Mikroprozessor ausgebildet sein kann, wirkt vorzugsweise noch mit einem Schwingquarz (nicht dargestellt) als Zeitgeber zusammen.

Zur Stromversorgung ist auf der Platine 15 in einem Gehäuse 20 eine Knopfzelle 21 angeordnet, welche eine Betriebsdauer von mehreren Jahren ermöglicht.

Die Erfindung ist nicht auf eine Kombination vorstehend beschriebener Merkmale beschränkt, sondern es versteht sich, dass der Fachmann sämtliche Merkmale der Erfindung, soweit sinnvoll, kombinieren wird.

### Bezugszeichenliste:

- 1: Wasserfiltervorrichtung
- 2: Deckel
- 3: Schieber
- 4: Einfüllöffnung
- 5: Griff
- 6: Behälter
- 7: Auslauf
- 8: Display
- 9: Griff
- 10: Verschluss
- 11: Fenster
- 12: Dichtung
- 13: Aussparung
- 14: Wechselanzeige
- 15: Platine
- 16: Kontakt
- 17: Reedkontakt
- 18: Reed-Relais
- 19: IC
- 20: Gehäuse
- 21: Knopfzelle

## Patentansprüche

1. Wechselanzeige für eine Wasserfiltervorrichtung mit einer austauschbaren Filterpatrone, wobei die Wechselanzeige einen Schalter umfasst, der die Betätigung eines Verschlussmechanismus erfasst und mit der Wechselanzeige zusammenwirkt,
**dadurch gekennzeichnet, dass** das Zusammenwirken des Schalters mit der Wechselanzeige nach einmaliger Betätigung des Schalters für ein vorgegebenes Zeitintervall gesperrt ist.

2. Wechselanzeige für eine Wasserfiltervorrichtung nach dem vorstehenden Anspruch, weiter umfassend eine Deckel mit zumindest einer Einfüllöffnung, welche den Verschlussmechanismus aufweist.

3. Wechselanzeige für eine Wasserfiltervorrichtung nach einem der vorstehenden Ansprüche, **dadurch gekennzeichnet, dass** der Verschlussmechanismus einen Schieber umfasst.

4. Wechselanzeige für eine Wasserfiltervorrichtung nach einem der vorstehenden Ansprüche, **dadurch gekennzeichnet, dass** der Schalter als Reedschalter ausgebildet ist.

5. Wechselanzeige für eine Wasserfiltervorrichtung nach dem vorstehenden Anspruch, **dadurch gekennzeichnet, dass** der Schalter im Wesentlichen in einem Schieber angeordnet ist.

6. Wechselanzeige für eine Wasserfiltervorrichtung nach einem der Ansprüche 4 bis 5, **dadurch gekennzeichnet, dass** der Schalter mit einem Magneten, insbesondere einem am Deckel angeordneten Magneten, zusammenwirkt.

7. Wechselanzeige für eine Wasserfiltervorrichtung nach einem der Ansprüche 4 bis 6, **dadurch gekennzeichnet, dass** der Schalter berührungslos betätigbar ist.

8. Wechselanzeige für eine Wasserfiltervorrichtung nach dem vorstehenden Anspruch, **dadurch gekennzeichnet, dass** ein LCD- Display in einem Schieber angeordnet ist.

9. Wechselanzeige für eine Wasserfiltervorrichtung nach dem vorstehenden Anspruch, **dadurch gekennzeichnet, dass** das Display bei geschlossenem Verschlussmechanismus verdeckt ist.

10. Wechselanzeige für eine Wasserfiltervorrichtung nach einem der vorstehenden Ansprüche, **dadurch gekennzeichnet, dass** die Wechselanzeige bei Nichtbetätigung in eine Schlafstellung fällt, in welcher insbesondere das Display ausschaltbar ist.

11. Wechselanzeige für eine Wasserfiltervorrichtung nach einem der vorstehenden Ansprüche, **dadurch gekennzeichnet, dass** die Wechselanzeige zumindest einen integrierten Schaltkreis (IC), insbesondere einen Mikroprozessor umfasst.

12. Wechselanzeige nach einem der vorstehenden Ansprüche, **dadurch gekennzeichnet, dass**
die Wechselanzeige eine Vorrichtung zur Erfassung der Entfernung der Filterpatrone umfasst und die Wechselanzeige mit der Vorrichtung zur Erfassung der Entfernung der Filterpatrone zusammenwirkt.

13. Wechselanzeige nach einem der vorstehenden Ansprüche, **dadurch gekennzeichnet, dass**
die Wechselanzeige mit einer Einrichtung zur Messung des Wasserstandes in einem zur Wasserfiltervorrichtung zugehörigen Behälter zusammenwirkt.
